# EUROPEAN PATENT APPLICATION

(11) **EP 4 030 618 A1**
(43) Date of publication of application: **20.07.2022**
(21) Application number: 21382027.7
(22) Date of filing: 18.01.2021
(51) Int. Cl.: H02S 20/30, F16H 1/16, F24S 30/42

(54) **REVERSIBLE TURNING DEVICE FOR ORIENTATION OF SOLAR PANELS**

(71) Applicant: Lucas Morata, Francisco, 08798 Sant Cugat de Sesgarrigues (Barcelona) (ES)
(72) Inventor: Lucas Morata, Francisco, 08798 Sant Cugat de Sesgarrigues (Barcelona) (ES)
(74) Representative: Pons

(57) **Abstract**

The present invention relates to a reversible turning device for orientation of solar panels, comprising a ring gear (1) provided with a toothed perimeter surface (11), wherein said ring gear (1) is mounted on a turning part (2) connected and solidly attached to the ring gear (1) and intended for coupling with a turning structure of at least one solar panel, a worm screw (4) arranged perpendicular to the ring gear (1), wherein said worm screw (4) is provided with a toothing that meshes tangentially with the toothed perimeter surface (11) of the ring gear (1) and is adapted for turning by driving a motor, wherein the worm screw (4) and the ring gear (1) are designed to enable the reversibility of the turning movement and enable a 360° turning range of the ring gear (1).

## Description

### OBJECT OF THE INVENTION

The present invention falls within the technical field of turning devices to carry out the orientation of solar panels. More specifically, the object of the present invention is a device that is coupled to the turning structure of one or more solar panels, being subjected mainly to radial loads, and that enables up to 360° turning range and the reversible movement of the gear by means of a worm screw that meshes tangentially with a ring gear which in turn is operatively connected to a casing by means of at least one rolling element. The device object of the present invention is designed for those applications or rotary mechanisms subjected to axial and radial loads and tipping torques, for example, and especially the orientation mechanisms of solar panels and concentrators.

### BACKGROUND OF THE INVENTION

Due to energy needs, especially electricity consumption, the installation of solar panels for energy production is increasingly widespread. For maximum use of solar energy, these solar panels or trackers are provided with a zenith turning module for the solar orientation thereof. Thanks to the motorisation of these modules, the panels are automatically orientated according to the solar position, improving performance.

This field continues to grow and requires continuous improvements in the facilities thereof. Turning modules are becoming more compact, lighter and more resistant.

One of the drawbacks of current solar trackers is that the turning module is responsible for withstanding most of the loads generated by the strong winds that tend to exist in solar fields. This means that the turning module has a rotation limitation since it must have an internal brake that prevents it from rotating 360° since the driving is irreversible, which means that the toothing of the turning module must prevent the solar panels from rotating due to the wind action which implies that the performance of the turning module is low.

### DESCRIPTION OF THE INVENTION

The present invention aims to solve some of the problems mentioned in the state of the art. More specifically, the present invention describes a reversible turning device for orientation of solar panels, comprising:
- a ring gear provided with a toothed perimeter surface, wherein said ring gear is mounted on a turning part connected and solidly attached to the ring gear and intended for coupling with a turning structure of at least one solar panel,
- at least one rolling element mounted on the turning part and operatively coupled to a structural casing,
- a worm screw arranged perpendicular to the ring gear, wherein said worm screw is provided with a toothing that meshes tangentially with the toothed perimeter surface of the ring gear and is adapted for turning by driving a motor, and wherein the worm screw and the ring gear are designed to enable the reversibility of the turning movement and enable a 360° turning range of the ring gear.

The device with the technical features described solves the problem of enabling the gear to rotate 360° and enabling the reversibility of the drive. Furthermore, the device can work on a vertical work plane, that is, with the ring gear mounted vertically on the structural casing and the worm screw in a horizontal and perpendicular arrangement to the ring gear.

Preferably, the worm screw that meshes tangentially with the toothed perimeter surface of the ring gear is adapted for turning by driving a motor at a speed greater than 1 revolution per minute.

In a preferred embodiment, the device comprises a third rolling element mounted on a rear portion of the turning part, wherein said third rolling element is operatively coupled to a rear cover which is in turn rigidly connected to the structural casing.

Alternatively, the rear cover can be connected to the structural casing by dispensing with the third rolling element.

Preferably, the turning part has a projection intended for coupling with the turning structure of at least one solar panel. Said housing can have, for example, a widened tubular configuration.

Alternatively, the turning part has an internal housing intended for coupling with a projection of the turning structure of at least one solar panel.

Therefore, the device, depending on the design of the turning part, can have a configuration by way of junction or turning flange.

Preferably, a portion of the turning part is tubular for mounting the rolling element. However, both the projection and the internal housing can have a tubular, hexagonal, or any other equivalent configuration in the state of the art that enable secure coupling with the turning structure where it is intended to be mounted.

In a preferred embodiment, the projection protrudes on both sides of the ring gear and the device comprises a third rolling element mounted on a rear portion of the projection, such that the third rolling element is operatively coupled to a rear cover which is in turn rigidly connected to the structural casing.

The aforementioned rolling elements can be of the maintenance-free type and have a symmetrical or asymmetrical configuration to distribute the loads.

Likewise, in a preferred embodiment, the worm screw comprises two rolling elements arranged at each end to enable the rotation thereof.

Rolling elements can be friction bushings, bearings or ball or roller tracks. For example, they can be plastic or bronze bushings.

In a preferred embodiment, the worm screw comprises a greasing device and the ring gear comprises a drainage element that enables the grease used by the greasing device to be evacuated and further enables internal pressures to be released.

Preferably the device further comprises at least one gasket with a central hole inserted on the projection to prevent the entry of impurities. The device can have as many gaskets as necessary.

The device object of the present invention is designed for those applications or rotary mechanisms subjected to axial and radial loads and tipping torques, being especially suitable for the orientation mechanisms of solar panels and concentrators.

Note that, due to the technical features discussed above, having only one transmission step in the worm screw and the ring gear, the device has a very high efficiency and consequently a lower energy consumption of the motor. Furthermore, it is a lighter device than those known in the state of the art.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:
Figure 1 shows an exploded view of a preferred embodiment of the present invention wherein the ring gear is illustrated mounted on a turning part that in turn has two rolling elements mounted on the surface thereof and operatively connected to the structural casing, wherein the ring gear meshes tangentially with the worm screw.
Figure 2A shows a perspective view of an embodiment of the device with a cylindrical geometry adapted for a junction-type connection for coupling with the solar panel.
Figure 2B shows a perspective view of an embodiment of the device with a cylindrical geometry with a projection adapted for a turning flange-type connection intended for coupling with the solar panel.
Figure 2C shows a perspective view of an embodiment of the device with a projection of hexagonal configuration adapted for a turning flange-type connection intended for being coupled with the solar panel.
Figure 3A shows a cross-sectional view of the embodiment of Figure 2A wherein the arrangement of the toothed ring supported on the rolling elements that enable a 360° turn is shown.
Figure 3B shows a cross-sectional view of the embodiment of Figure 2B wherein the arrangement of the toothed ring supported on the rolling elements that enable a 360° turn is shown.
Figure 3C shows a cross-sectional view of the embodiment of Figure 2C wherein the arrangement of the toothed ring supported on the rolling elements that enable a 360° turn is shown.

### PREFERRED EMBODIMENT OF THE INVENTION

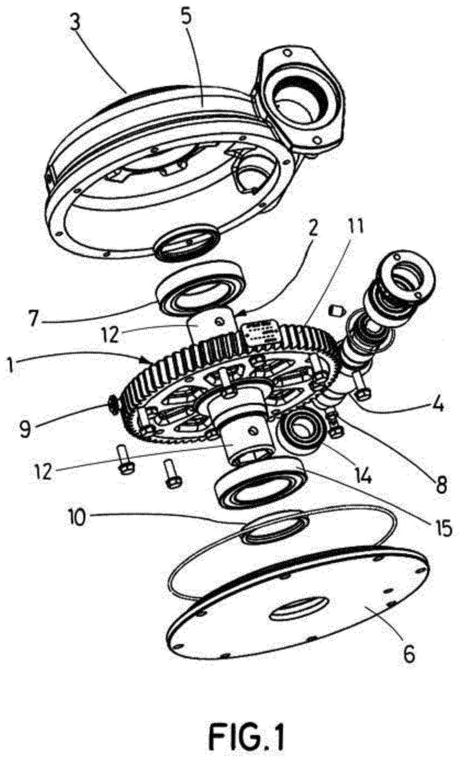

A detailed description of a preferred exemplary embodiment of the object of the invention is provided below, with the aid of the attached Figures 1-3 described above.

Figure 1 shows an exploded view of a preferred embodiment of the present invention wherein it is illustrated that the reversible turning device for orientation of solar panels comprises a ring gear (1) provided with a toothed perimeter surface (11), wherein said ring gear (1) is mounted on a turning part (2) provided with two projections (12) of cylindrical configuration, wherein said turning part (2) is connected and solidly attached to the ring gear (1), being intended for coupling with a turning structure of at least one solar panel (not shown).

Likewise, as can be seen in Figure 1, the device is provided with a worm screw (4) arranged perpendicular to the ring gear (1) and connected to the structural casing (5) by means of at least one second rolling element (14), wherein said worm screw (4) comprises a toothing that meshes tangentially with the toothed perimeter surface (11) of the ring gear (1) and is adapted for turning by driving a motor (not shown), and wherein the worm screw (4) and the ring gear (1) are designed to enable the reversibility of the turning movement and enable a 360° turning range of the ring gear.

The ring gear (1) is mounted with respect to the structural casing (5) by means of a rolling element (7) mounted on the projection (12) of the turning part (2) and is firmly connected to a structural casing (5).

Furthermore, in a preferred embodiment, the device comprises a third rolling element (15) mounted on the rear projection (12) of the turning part (2), wherein said third rolling element (15) is operatively coupled to a rear cover (6) which is in turn rigidly connected to the structural casing (5).

Furthermore, in the preferred embodiment described above, the worm screw (4) comprises a greasing device (8) and the ring gear (1) comprises a drainage element (9) that enables the grease used by the greasing device (8) to be evacuated and further enables internal pressures to be released.

Furthermore, the device comprises at least one gasket (10) with a central hole inserted on the rear projection (12) to prevent the entry of impurities.

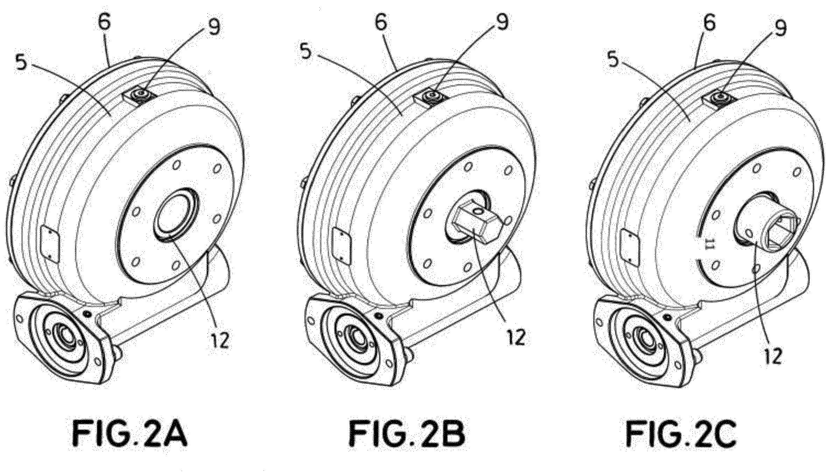

Figures 2A, 2B and 2C illustrate perspective views of different embodiments of the device, wherein it is shown that the connection with the solar panel can be of the junction type or of the turning flange type depending on the design of the turning part (2) intended for being coupled with the solar panel.

Therefore, it can have projections (12) or an opening with a tubular, hexagonal, or any other equivalent configuration that enables the secure coupling with the turning structure where it is intended to be mounted.

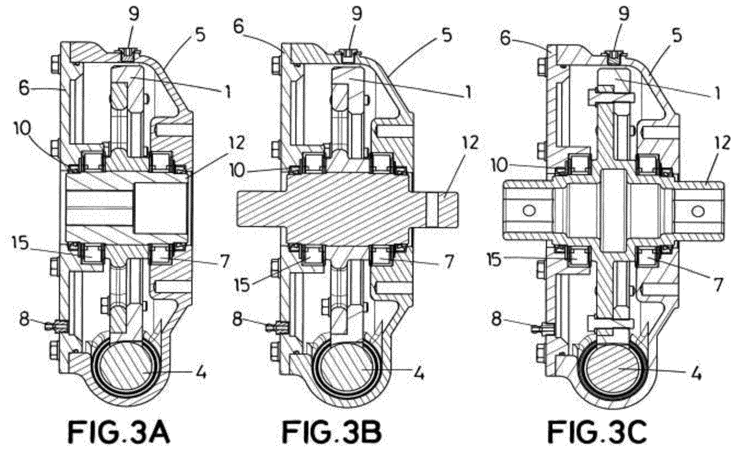

Figures 3A, 3B and 3C show a cross-sectional view of the preferred embodiments illustrated in Figure 2, wherein the arrangement of the ring gear (1) mounted on the rolling elements (7) that enable a 360° turn can be appreciated, as well as the way in which the ring gear (1) is secured to the structural casing (5) and the different junctions or outlet flanges that can be mounted on this drive in different preferred embodiments.

## Claims

1. A reversible turning device for orientation of solar panels, **characterised in that** it comprises:
- a ring gear (1) provided with a toothed perimeter surface (11), wherein said ring gear (1) is mounted on a turning part (2) connected and solidly attached to the ring gear (1) and intended for coupling with a turning structure of at least one solar panel,
- at least one rolling element (7) mounted on the turning part (2) and operatively coupled to a structural casing (5),
- a worm screw (4) arranged perpendicular to the ring gear (1) and connected to the structural casing (5) by means of at least one second rolling element (14), wherein said worm screw (4) is provided with a toothing that meshes tangentially with the toothed perimeter surface (11) of the ring gear (1) and is adapted for turning by driving a motor, wherein the worm screw (4) and the ring gear (1) are designed to enable the reversibility of the turning movement and enable a 360° turning range of the ring gear (1).

2. The reversible turning device of claim 1, which comprises a third rolling element (15) mounted on a rear portion of the turning part (2), wherein said third rolling element (15) is operatively coupled to a rear cover (6) which is in turn rigidly connected to the structural casing (5).

3. The device of claim 1, wherein the turning part (2) has a projection intended for coupling with the turning structure of at least one solar panel.

4. The device of claim 1, wherein the turning part (2) has an internal housing intended for coupling with a projection of the turning structure of at least one solar panel.

5. The reversible turning device of claim 1, wherein the worm screw (4) comprises a greasing device (8) and the ring gear (1) comprises a drainage element (9) that enables the grease used by the greasing device (8) to be evacuated and further enables internal pressures to be released.

6. The reversible turning device of claim 1, further comprising at least one gasket (10) with a central hole inserted on the projection (2) to prevent the entry of impurities, providing insulation to the interior to minimise maintenance and increase the lifespan of the device.

7. The reversible turning device of claim 1, wherein the worm screw (4) that meshes tangentially with the toothed perimeter surface (11) of the ring gear (1), is adapted for turning by driving a motor at speeds greater than 1 revolution per minute.
